# EUROPEAN PATENT SPECIFICATION

(11) **EP 4 388 509 B1**
(45) Date of publication and mention of the grant of the patent: **06.05.2026**
(21) Application number: 22765692.3
(22) Date of filing: 19.08.2022
(51) Int. Cl.: G06V 20/58, G06V 20/56, G06V 10/774, G06V 10/776

(54) **DETECTED OBJECT PATH PREDICTION FOR VISION-BASED SYSTEMS**
ERKANNTE OBJEKTPFADVORHERSAGE FÜR SICHTBASIERTE SYSTEME
PRÉDICTION DE TRAJECTOIRE D'OBJET DÉTECTÉ POUR DES SYSTÈMES BASÉS SUR LA VISION

(30) Priority: 19.08.2021 US 202163260439 P; 09.12.2021 US 202163287936 P
(43) Date of publication of application: 26.06.2024
(73) Proprietor: Tesla, Inc., Austin, TX 78725 (US)
(72) Inventor: VASUDEVAN, Nanda Kishore, Austin, Texas 78725 (US); CHHEDA, Dhiral, Austin, Texas 78725 (US)
(74) Representative: Liesegang, Eva
(86) International application number: PCT/US2022/040906
(87) International publication number: WO 2023/023336

(56) References cited:
- WO-A1-2020/245654
- US-A1- 2019 096 256

## Description

### BACKGROUND

Generally described, computing devices and communication networks can be utilized to exchange data and/or information. In a common application, a computing device can request content from another computing device via the communication network. For example, a computing device can collect various data and utilize a software application to exchange content with a server computing device via the network (e.g., the Internet).

Generally described, a variety of vehicles, such as electric vehicles, combustion engine vehicles, hybrid vehicles, etc., can be configured with various sensors and components to facilitate operation of the vehicle or management of one or more systems include in the vehicle. In certain scenarios, a vehicle owner or vehicle user may wish to utilize sensor-based systems to facilitate in the operation of the vehicle. For example, vehicles can often include hardware and software functionality that facilitates location services or can access computing devices that provide location services. In another example, vehicles can also include navigation systems or access navigation components that can generate information related to navigational or directional information provided to vehicle occupants and users. In still further examples, vehicles can include vision systems to facilitate navigational and location services, safety services or other operational services/components.

US 2019/096256 A1 discloses vehicles systems for predicting a trajectory of an object proximate to vehicles.
WO 2020/245654 A1 discloses systems and methods for vehicle navigation. In one implementation, at least one processor may receive, from a camera, at least one captured image representative of features in an environment of the vehicle. The processor may identify an intersection and a pedestrian in a vicinity of the intersection represented in the image. The processor may determine a navigational action for the vehicle relative to the intersection based on routing information for the vehicle; and determine a predicted path for the vehicle relative to the intersection based on the determined navigational action and a predicted path for the pedestrian based on analysis of the image. The processor may further determine whether the vehicle is projected to collide with the pedestrian based on the projected paths; and, in response, cause a system associated with the vehicle to implement a collision mitigation action.
The invention is defined in the claims.

### BRIEF DESCRIPTION OF THE DRAWINGS

This disclosure is described herein with reference to drawings of certain embodiments, which are intended to illustrate, but not to limit, the present disclosure. It is to be understood that the accompanying drawings, which are incorporated in and constitute a part of this specification, are for the purpose of illustrating concepts disclosed herein and may not be to scale.
FIG. 1A illustrates an environment that corresponds to vehicles in accordance with one or more aspects of the present application;
FIG. 1B an illustrative vision system for a vehicle in accordance with one or more aspects of the present application;
FIG. 2 depicts an illustrative architecture for implementing a vision information processing component in accordance with aspects of the present application,
FIG. 3 is a flow diagram illustrative of a simulated model content generation routine implemented by a simulated content service in accordance with illustrative embodiments;
FIGS. 4A and 4B illustrate representations of potential paths of travel for a detected object in accordance with aspects of the present application; and
FIGS. 5A and 5B illustrate two different embodiments for a model of a feasibility cone for a detected object in accordance with aspects of the present application.

### DETAILED DESCRIPTION

Generally described, one or more aspects of the present disclosure relate to the configuration and implementation of vision systems in vehicles. By way of illustrative example, aspects of the present application relate to the configuration and training of machine learned algorithms used in vehicles relying solely on vision systems for various operational functions. Illustratively, the vision-only systems are in contrast to vehicles that may combine vision-based systems with one or more additional sensor systems, such as radar-based systems, LIDAR-based systems, SONAR-systems, and the like.

Vision-only systems can be configured with machine learned algorithms that can process inputs solely from vision systems that can include a plurality of cameras mounting on the vehicle. The machine learned algorithm can generate outputs identifying objects and specifying characteristics/attributes of the identified objects, such as position, velocity, acceleration measured relative to the vehicle. Additionally, for dynamic objects that are traveling, one or more aspects relates to providing characterizations of potential paths of travel for the detection objects relative to the vehicle. The potential paths of travel can be prioritized or otherwise sorted based on confidence values. The outputs from the machine learned algorithms, including the determined potential paths of travel data, can be then utilized for further processing, such as for navigational systems, locational systems, safety systems and the like.

In accordance with aspects of the present application, a service can configure the machine learned algorithm in accordance with a supervised learning model in which a machine learning algorithm is trained with labeled data to identify and represent identified objects and specified characteristics/attributes, such as identification of objects related to travel surface(s) including road edges, lanes lines, center lanes, and the like. Additionally, the machine learned algorithm(s) can be further configured to identify static objects relative to the travel surfaces, such as static and dynamic objects (e.g., vehicles) and associated information, such as position, velocity, acceleration, and the like.

The service can utilize the identified objects (e.g., a geometric representation) and associated attributes to identify a set of potential paths of travel. Specifically, the representation of potential paths of travel can be based on kinetics-based modeling as applied to the attributes of the travel surface and the individual attributes of the detected objects. Illustratively, the processing results of the processing of input can also include confidence values characterizing a likelihood that the dynamic object will follow the predicated path. In some embodiments, the service can sort, filter or otherwise process a target set of potential paths based on thresholds, such as removing any determined potential paths of travel that do not exceed a minimum threshold.

In some embodiments, the service can further process the generated set of potential paths of travel based on additional criteria or external information. In one embodiment, the service can determine whether any additional detected objects (static or dynamic) may influence or otherwise affect the potential path of travel or modify the confidence values. For example, assume an initial set of paths of travel for a dynamic object includes paths of travel related to straight travel in an existing lane, turning at an intersection or changing lanes to an adjacent lane and that all the potential paths meet or exceed an initial confidence value threshold. If a static object is detected in the current lane (e.g., a parked car), the service would then adjust the confidence value, remove the straight travel in the existing lane, generate additional or alternative potential paths of travel, etc. as influenced by the external, detected object. The generated and processed paths can be provided or used as inputs for additional systems, such as navigation systems/services, semi-automated or automated driving systems/services and the like.

Traditionally, vehicles are associated with physical sensors that can be used to provide inputs to control components. For many navigational, location and safety system, the physical sensors include detection-based systems, such as radar systems, LIDAR systems, etc. that are able to detect objects and characterize attributes of the detected objects. In some applications, detection systems can increase the cost of manufacture and maintenance. Additionally, in some environmental scenarios, such as rain, fog, snow, the detection-based systems may not be well suited for detection or can increase detection errors.

To address at least a portion of the above deficiencies, aspects of the present application correspond to utilization of a set of inputs from vision systems to generate simulations or predicted paths of travel for dynamic objects detected from the vision systems. Illustratively, a service can process the set of inputs (e.g., the associated ground truth label data) collected from one or more vision systems (or additional services) to identify predicted paths of travel for any dynamic objects detected from the captured vision system information. Typically, a plurality of predicted paths of travels can be generated such that more than one path of travel may be considered to meet or exceed a minimal threshold. The resulting predicted paths of travel can be further associated with confidence values that characterize the likelihood that any one predicted path of travel for a detected dynamic object will occur. The generated and processed paths can be provided or used as inputs for additional systems, such as navigation systems/services, semi-automated or automated driving systems/services and the like.

Although the various aspects will be described in accordance with illustrative embodiments and combination of features, one skilled in the relevant art will appreciate that the examples and combination of features are illustrative in nature and should not be construed as limiting. More specifically, aspects of the present application may be applicable with various types of vehicles including vehicles with different of propulsion systems, such as combination engines, hybrid engines, electric engines, and the like. Still further, aspects of the present application may be applicable with various types of vehicles that can incorporate different types of sensors, sensing systems, navigation systems, or location systems. Accordingly, the illustrative examples should not be construed as limiting. Similarly, aspects of the present application may be combined with or implemented with other types of components that may facilitate operation of the vehicle, including autonomous driving applications, driver convenience applications and the like.

Illustratively, the set of vehicles 102 correspond to one or more vehicles configured with vision-only based system for identifying objects and characterizing one or more attributes of the identified objects. The set of vehicles 102 are configured with machine learned algorithms, such as machine learned algorithms implemented a supervised learning model, that are configured to utilize solely vision systems inputs to identify objects and characterize attributes of the identified objects, such as position, velocity and acceleration attributes. The set of vehicles 102 may be configured without any additional detection systems, such as radar detection systems, LIDAR detection systems, and the like.

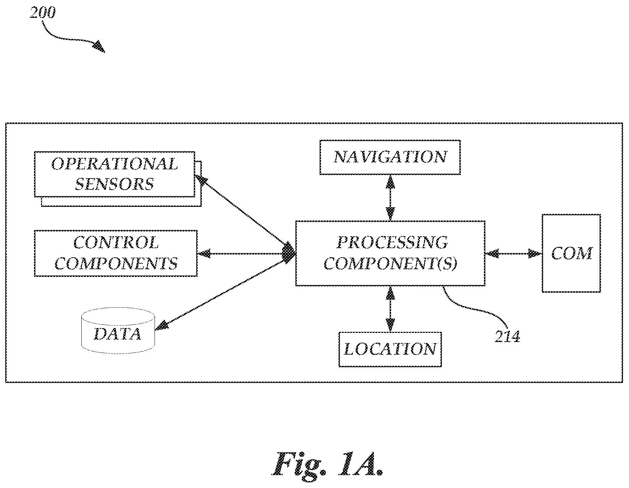

For purposes of illustration, FIG. 1A illustrates an environment that corresponds to vehicles 102 in accordance with one or more aspects of the present application. The environment includes a collection of local sensor inputs that can provide inputs for the operation of the vehicle or collection of information as described herein. The collection of local sensors can include one or more sensor or sensor-based systems included with a vehicle or otherwise accessible by a vehicle during operation. The local sensors or sensor systems may be integrated into the vehicle. Alternatively, the local sensors or sensor systems may be provided by interfaces associated with a vehicle, such as physical connections, wireless connections, or a combination thereof.

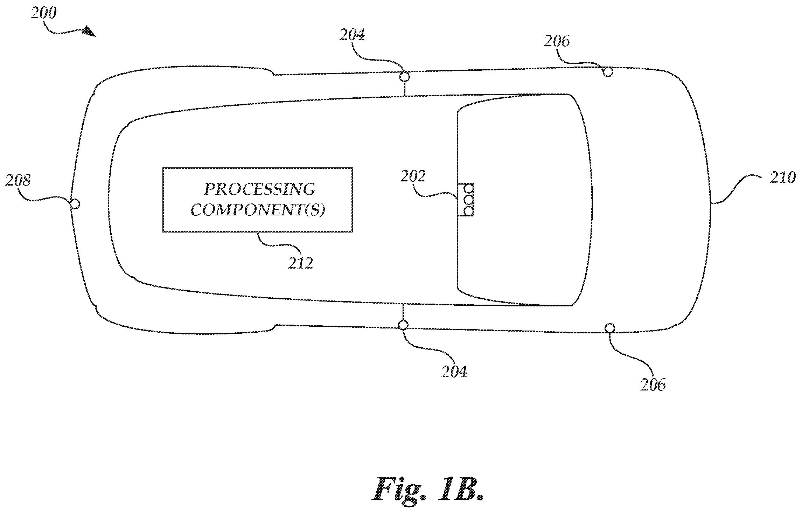

In one aspect, the local sensors can include vision systems that provide inputs to the vehicle, such as detection of objects, attributes of detected objects (e.g., position, velocity, acceleration), presence of environment conditions (e.g., snow, rain, ice, fog, smoke, etc.), and the like. An illustrative collection of cameras mounted on a vehicle to form a vision system will be described with regard to FIG. 1B. As previously described, vehicles 102 will rely on such vision systems for defined vehicle operational functions without assistance from or in place of other traditional detection systems.

In yet another aspect, the local sensors can include one or more positioning systems that can obtain reference information from external sources that allow for various levels of accuracy in determining positioning information for a vehicle. For example, the positioning systems can include various hardware and software components for processing information from GPS sources, Wireless Local Area Networks (WLAN) access point information sources, Bluetooth information sources, radio-frequency identification (RFID) sources, and the like. In some embodiments, the positioning systems can obtain combinations of information from multiple sources. Illustratively, the positioning systems can obtain information from various input sources and determine positioning information for a vehicle, specifically elevation at a current location. In other embodiments, the positioning systems can also determine travel-related operational parameters, such as direction of travel, velocity, acceleration, and the like. The positioning system may be configured as part of a vehicle for multiple purposes including self-driving applications, enhanced driving or user-assisted navigation, and the like. Illustratively, the positioning systems can include processing components and data that facilitate the identification of various vehicle parameters or process information.

In still another aspect, the local sensors can include one or more navigations system for identifying navigation related information. Illustratively, the navigation systems can obtain positioning information from positioning systems and identify characteristics or information about the identified location, such as elevation, road grade, etc. The navigation systems can also identify suggested or intended lane location in a multi-lane road based on directions that are being provided or anticipated for a vehicle user. Similar to the location systems, the navigation system may be configured as part of a vehicle for multiple purposes including self-driving applications, enhanced driving or user-assisted navigation, and the like. The navigation systems may be combined or integrated with positioning systems. Illustratively, the positioning systems can include processing components and data that facilitate the identification of various vehicle parameters or process information.

The local resources further include one or more processing component(s) that may be hosted on the vehicle or a computing device accessible by a vehicle (e.g., a mobile computing device). The processing component(s) can illustratively access inputs from various local sensors or sensor systems and process the inputted data as described herein. For purposes of the present application, the processing component(s) will be described with regard to one or more functions related to illustrative aspects. For example, processing component(s) in vehicles 102 will collect and transmit the first data set corresponding to the collected vision information.

The environment can further include various additional sensor components or sensing systems operable to provide information regarding various operational parameters for use in accordance with one or more of the operational states. The environment can further include one or more control components for processing outputs, such as transmission of data through a communications output, generation of data in memory, transmission of outputs to other processing components, and the like.

With reference now to FIG. 1B, an illustrative vision system 200 for a vehicle will be described. The vision system 200 includes a set of cameras that can capture image data during the operation of a vehicle. As described above, individual image information may be received at a particular frequency such that the illustrated images represent a particular time stamp of images. In some embodiments, the image information may represent high dynamic range (HDR) images. For example, different exposures may be combined to form the HDR images. As another example, the images from the image sensors may be pre- processed to convert them into HDR images (e.g., using a machine learning model).

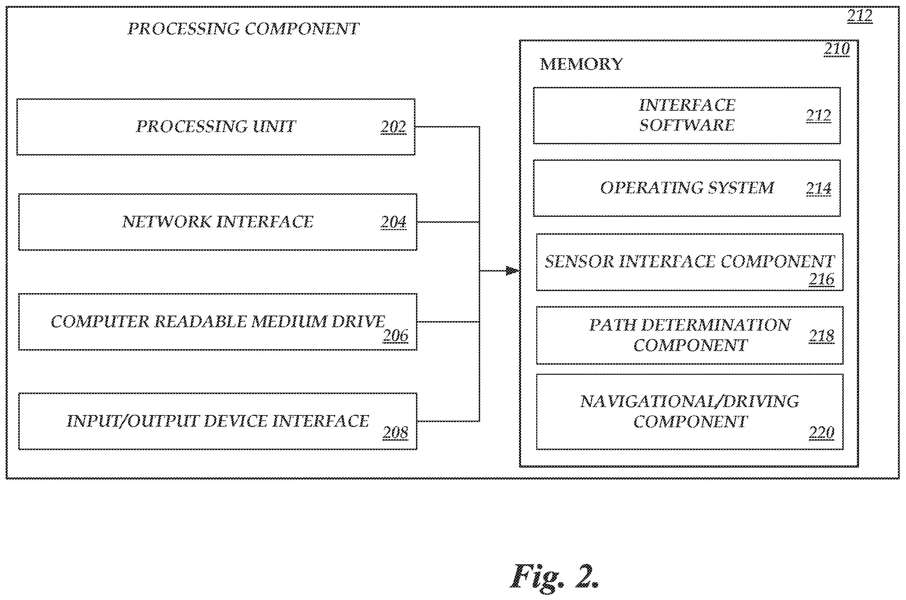

As illustrated in FIG 2B, the set of cameras can include a set of front facing cameras 202 that capture image data. The front facing cameras may be mounted in the windshield area of the vehicle to have a slightly higher elevation. As illustrated in FIG. 1B, the front facing cameras 202 can including multiple individual cameras configured to generate composite images. For example, the camera housing may include three image sensors which point forward. In this example, a first of the image sensors may have a wide-angled (e.g., fish- eye) lens. A second of the image sensors may have a normal or standard lens (e.g., 35 mm equivalent focal length, 50 mm equivalent, and so on). A third of the image sensors may have a zoom or narrow lens. In this way, three images of varying focal lengths may be obtained in the forward direction by the vehicle. The vision system 200 further includes a set of cameras 204 mounted on the door pillars of the vehicle. The vision system 200 can further include two cameras 206 mounted on the front bumper of the vehicle. Additionally, the vision system 200 can include a rearward facing camera 208 mounted on the rear bumper, trunk or license plate holder.

The set of cameras 202, 204, 206, and 208 may all provide captured images to one or more processing components 212, such as a dedicated controller/embedded system. For example, the processing component 212 may include one or more matrix processors which are configured to rapidly process information associated with machine learning models. The processing component 212 may be used, in some embodiments, to perform convolutions associated with forward passes through a convolutional neural network. For example, input data and weight data may be convolved. The processing component 212 may include a multitude of multiply-accumulate units which perform the convolutions. As an example, the matrix processor may use input and weight data which has been organized or formatted to facilitate larger convolution operations. Alternatively, the image data may be transmitted to a general-purpose processing component.

Illustratively, the individual cameras may operate, or be considered individually, as separate inputs of visual data for processing. In other embodiments, one or more subsets of camera data may be combined to form composite image data, such as the trio of front facing cameras 202. As further illustrated in FIG. 1B, in embodiments related to vehicles incorporating vision only systems, such as vehicles 102, no detection systems would be included at 210.

With reference now to FIG. 2, an illustrative architecture for implementing the vision information processing component 112 on one or more local resources or a service will be described. The vision information processing component 112 may be part of components/systems that provide functionality associated with the machine learned algorithms for object recognition, navigation, locations services, and the like.

The architecture of FIG. 2 is illustrative in nature and should not be construed as requiring any specific hardware or software configuration for the processing component 212. The general architecture of the processing component 212 depicted in FIG. 2 includes an arrangement of computer hardware and software components that may be used to implement aspects of the present disclosure. As illustrated, the processing component 212 includes a processing unit 202, a network interface 204, a computer readable medium drive 206, and an input/output device interface 208, all of which may communicate with one another by way of a communication bus. The components of the processing component 212 may be physical hardware components or implemented in a virtualized environment.

The network interface 204 may provide connectivity to one or more networks or computing systems. The processing unit 202 may thus receive information and instructions from other computing systems or services via a network. The processing unit 202 may also communicate to and from memory 210 and further provide output information for an optional display (not shown) via the input/output device interface 208. In some embodiments, the vision information processing component 112 may include more (or fewer) components than those shown in FIG. 2.

The memory 210 may include computer program instructions that the processing unit 202 executes in order to implement one or more embodiments. The memory 210 generally includes RAM, ROM, or other persistent or non-transitory memory. The memory 210 may store interface software 212 and an operating system 214 that provides computer program instructions for use by the processing unit 202 in the general administration and operation of the processing component 212. The memory 210 may further include computer program instructions and other information for implementing aspects of the present disclosure. For example, in one embodiment, the memory 210 includes a sensor interface component 216 that obtains information (e.g., captured video information) from vehicles, such as vehicles 102, data stores, other services, and the like.

The memory 210 further includes a vision information processing component 218 for obtaining and processing the captured or processed vision system information and generating one or more potential paths of travels for detected dynamic objects as described herein. The memory 210 can further include one or more navigation/directional components component(s) 220 for utilizing the generated predicted path information, such as for navigational or direction purposes. Although illustrated as components combined within the vision information processing component 112, one skilled in the relevant art will understand that one or more of the components in memory 210 may be implemented in individualized computing environments, including both physical and virtualized computing environments.

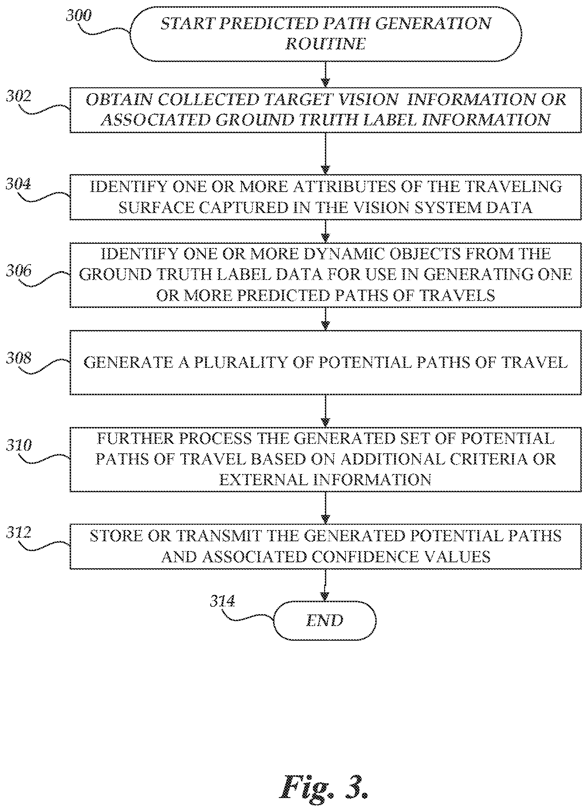

Turning now to FIG. 3, a routine 300 for processing collected vision and simulated content system data will be described. Routine 300 is illustratively implemented by the processing component 212. As described above, routine 500 may be implemented after a vehicle 200 have acquired vision system data and ground truth label data for the captured vision system data is available for processing.

At block 302, the processing component 212 obtains and collects the generated vision data. Illustratively, the vehicles 200 may be configured to collect vision system data and generated associated ground truth labels. As described above, the vehicles 200 may include processing capabilities in vision systems to generate, at least in part, ground truth label information for the captured vision system information. In other embodiments, the vehicles 200 may transmit captured vision system information (with or without any ground truth labels) to another service, such as in a communication network. The additional services can then add (manually or automatically) ground truth label information for further processing.

At block 304, the processing component 212 can first identify one or more attributes of the traveling surface captured in the vision system data. Illustratively, the one or more attributes (e.g., ground truth labels) can include road edges ground truth labels, lane lines ground truth labels, signage ground truth labels, directional controls ground truth labels, and the like. Additionally, in some embodiments, the set of detectable objects can be projected from the visible horizon (e.g., edge of the captured vision information) to a determined stop point. The stop point can illustratively be the vehicle 200 in some embodiments. In other embodiments, stop point can illustratively be a distance behind the vehicle 200.

At block 306, the processing component 212 identifies one or more dynamic objects from the ground truth label data for use in generating one or more predicted paths of travels. Illustratively, the dynamic objects correspond to one or more objects determined to be located within the traveling surface.

At block 308, the processing component 212 can utilize the identified objects (e.g., a geometric representation) and associated attributes to identify a set of potential paths of travel. Specifically, the representation of potential paths of travel can be based on kinetics-based modeling as applied to the attributes of the travel surface and the individual attributes of the detected objects. In some embodiments, one or more machine learned algorithms may be trained to automatically determine or generate the representations of a set of potential paths of travel.

In one embodiment, a detected dynamic object can be associated with some combination of directional ground truth labels (e.g., yaw), velocity ground truth label data, and acceleration ground truth label data. Based on these attributes (e.g., ground truth labels), each dynamic object can be further represented with a range of likely actions on a traveling surface, such as via a cone or triangular region on the traveling surface. Such representation may be generally referred to as a feasibility representation. In this embodiment, the shape of the cone/triangle may be represented in a more narrow, longer manner in scenarios in which the velocity and acceleration ground truth labels are higher (e.g., the speed of the dynamic object is unlikely to be able to complete types of turns or other activity in view of the determined speed). Similarly, the shape of the cone/triangle may be represented in a more wide, shorter manner in scenarios in which the velocity and acceleration ground truth labels are lower (e.g., the speed of the dynamic object is more likely to be able to complete types of turns or other activity in view of the determined speed). In accordance with this embodiment, potential paths of travel outside of the represented range of likely actions may be removed or mitigated.

Illustratively, at block 308, individual potential paths of travel can further include confidence values characterizing a likelihood that the dynamic object will follow a determined predicated path. In some embodiments, the service can sort, filter or otherwise process a target set of potential paths based on thresholds, such as removing any determined potential paths of travel that do not exceed a minimum threshold. Illustratively, the processing component 212 can utilized one or more machine learned algorithms to determine the confidence values for individual potential paths. In some embodiments, the sum of the set of confidence values for a plurality of potential paths does not have to sum to 100%. In this regard, confidence values associated with two or more potential paths of travel may be sufficient high such that the sum exceeds 100%. In such scenarios, the navigational/directional services can utilize other functionality to determine which path to consider. In another example, confidence values associated with an entire set of potential paths of travel may be lower than 100%, which may be indicative that no individual potential path of travel may be considered or characterized as highly likelihood or significantly more likely than other potential paths.

At block 310, processing component 212 can further process the generated set of potential paths of travel based on additional criteria or external information. In one embodiment, the service can determine whether any additional detected objects (static or dynamic) may influence or otherwise affect the potential path of travel or modify the confidence values. For example, assume an initial set of paths of travel for a dynamic object includes paths of travel related to straight travel in an existing lane, turning at an intersection or changing lanes to an adjacent lane and that all the potential paths meet or exceed an initial confidence value threshold. If a static object is detected in the current lane (e.g., a parked car), the service would then adjust the confidence value, remove the straight travel in the existing lane, generate additional or alternative potential paths of travel, etc. as influenced by the external, detected object. The generated and processed paths can be provided or used as inputs for additional systems, such as navigation systems/services, semi-automated or automated driving systems/services and the like.

At block 312, the processing component 212 can store or transmit the generated potential paths and associated confidence values. As described herein, the generated and processed paths can be provided or used as inputs for additional systems, such as navigation systems/services, semi-automated or automated driving systems/services and the like. Routine 300 terminates at block 314.

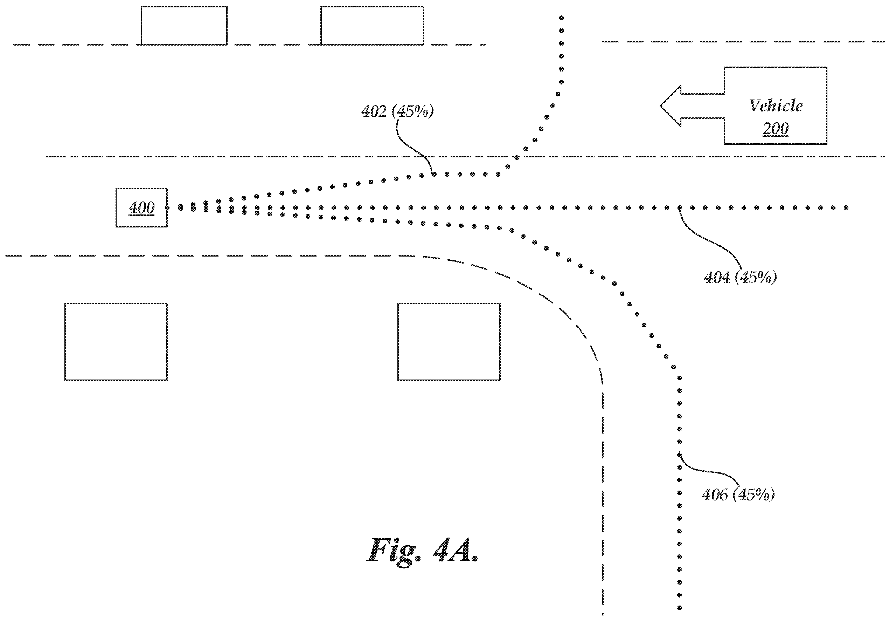

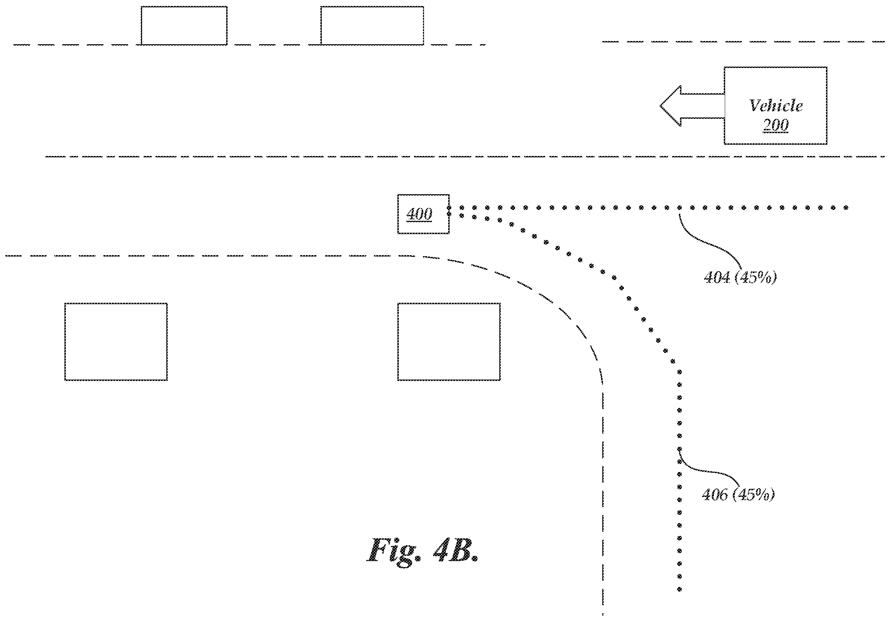

FIG. 4A and 4B illustrate scenarios in which a dynamic object 400 has been identified and potential paths of travel are generated in two distinct points of time. In a first time (FIG. 4A), the detected object 400 is can be predicted along three potential paths 402, 404, 406 based on the attributes of the detected objects (e.g., yaw and velocity). In this example, each scenario is considered to have a 45% likelihood/confidence value. At a second time (FIG. 4B), assume the same detected object has passed the entry a lane corresponding to previous path 402 (e.g., a left-hand turn). In this time, the determined potential paths of travel for the second point of time will change because a left-hand determine may not be considered to likely at this point of time. Illustratively, the confidence value of the two remaining paths 404, 406 may still remain at 45%.

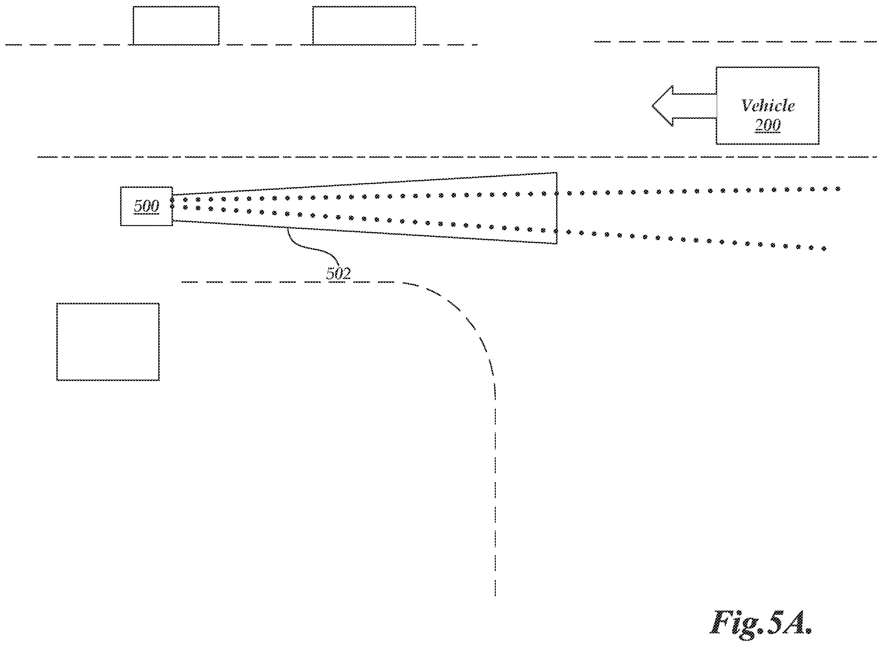

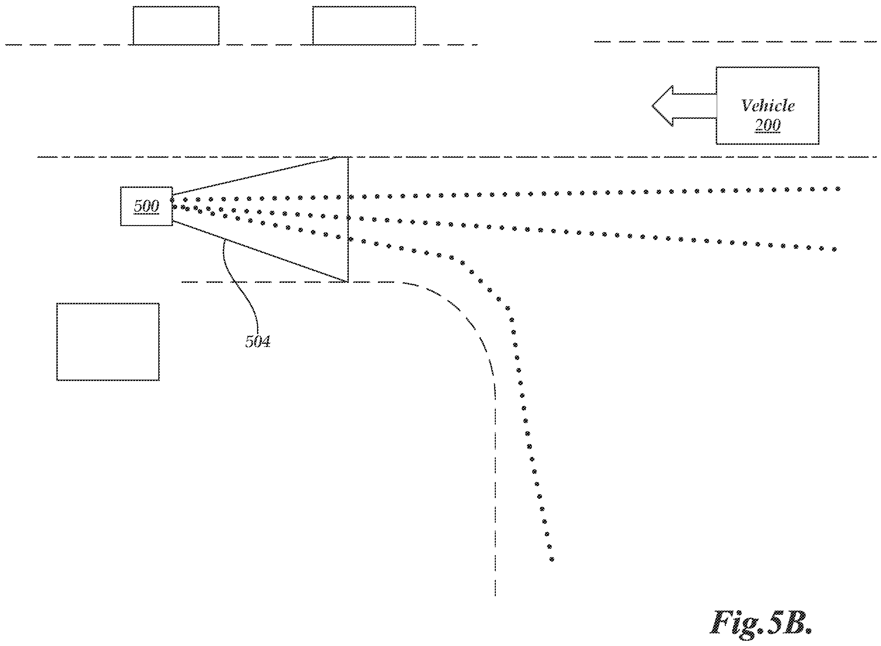

FIGS. 5A and 5B illustrate two difference embodiments for a model of feasibility cone 502, 504 for a dynamic object 500. As previously described, the shape of the cone/triangle (e.g., feasibility cone) in FIG. 5A may be represented in a more narrow, longer manner in scenarios in which the velocity and acceleration ground truth labels are higher (e.g., the speed of the dynamic object is unlikely to be able to complete types of turns or other activity in view of the determined speed). Similarly, the shape of the cone/triangle in FIG. 5B may be represented in a more wide, shorter manner in scenarios in which the velocity and acceleration ground truth labels are lower (e.g., the speed of the dynamic object is more likely to be able to complete types of turns or other activity in view of the determined speed). In accordance with this embodiment, potential paths of travel outside of the represented range of likely actions may be removed or mitigated.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the appended claims. Thus, the present disclosure is limited only by the claims.

In the foregoing specification, the disclosure has been described with reference to specific embodiments. However, as one skilled in the art will appreciate, various embodiments disclosed herein can be modified or otherwise implemented in various other ways without departing from the scope of the appended claims. Accordingly, this description is to be considered as illustrative and is for the purpose of teaching those skilled in the art the manner of making and using various embodiments of the disclosed decision and control algorithms. It is to be understood that the forms of disclosure herein shown and described are to be taken as representative embodiments. Equivalent elements, materials, processes, or steps may be substituted for those representatively illustrated and described herein. Moreover, certain features of the disclosure may be utilized independently of the use of other features, all as would be apparent to one skilled in the art after having the benefit of this description of the disclosure. Expressions such as "including", "comprising", "incorporating", "consisting of", "have", "is" used to describe and claim the present disclosure are intended to be construed in a non-exclusive manner, namely allowing for items, components or elements not explicitly described also to be present. Reference to the singular is also to be construed to relate to the plural.

Further, various embodiments disclosed herein are to be taken in the illustrative and explanatory sense and should in no way be construed as limiting of the present disclosure. All joinder references (e.g., attached, affixed, coupled, connected, and the like) are only used to aid the reader's understanding of the present disclosure, and may not create limitations, particularly as to the position, orientation, or use of the systems and/or methods disclosed herein. Therefore, joinder references, if any, are to be construed broadly. Moreover, such joinder references do not necessarily infer those two elements are directly connected to each other.

Additionally, all numerical terms, such as, but not limited to, "first", "second", "third", "primary", "secondary", "main" or any other ordinary and/or numerical terms, should also be taken only as identifiers, to assist the reader's understanding of the various elements, embodiments, variations and/or modifications of the present disclosure, and may not create any limitations, particularly as to the order, or preference, of any element, embodiment, variation and/or modification relative to, or over, another element, embodiment, variation and/or modification.

## Claims

1. A system for managing vision systems (200) in vehicles (102), the system comprising:
one or more computing systems including processing devices and memory, that execute computer-executable instructions, for implementing a vision system (200) processing component (212) operative to:
obtain first ground truth label data associated with vision data collected from one or more vision systems (200), wherein the first ground truth label data corresponds to attributes of travel surfaces including at least one of road edges ground truth labels, lane line ground truth labels, or road markings;
obtain second ground truth label data associated with vision data collected from the one or more vision systems (200), wherein the second ground truth label data corresponds to attributes of one or more dynamic objects (400, 500);
process the first ground truth label data and second ground truth label data to form a plurality of predicted paths of travel for the one or more dynamic objects (400, 500) by applying a kinetics-based model to the attributes of at least one of the travel surfaces or the attributes of the one or more dynamic objects (400, 500), wherein each predicted path of travel is associated with a confidence value;
process the plurality of predicted paths of travel based on at least one additional ground truth label to modify at least one predicted path of travel of the plurality of predicted paths of travel, the modification based on application of an updated kinetics-based model to additional attributes of additional detected objects; and
store the plurality of predicted paths of travel and associated confidence values.

2. The system as recited in Claim 1, wherein the vision system (200) processing component (212) processes the obtained first and second ground truth label data to form a plurality of predicted paths of travel based on selecting potential paths of travel exceeding a minimal confidence value threshold.

3. The system as recited in Claim 1, wherein the first and second ground truth label data corresponds to one or more objects detected within a horizon of the captured video data.

4. The system as recited in Claim 3, wherein the first and second ground truth label data corresponds to one or more objects detected beyond a current defined location of the vehicle (102).

5. The system as recited in Claim 1, wherein the attributes of one or more dynamic objects (400, 500) corresponds to at least one of yaw, velocity or acceleration of the dynamic object (400, 500).

6. The system as recited in Claim 1, wherein the vision system (200) processing component (212) processes the plurality of predicted paths of travel based on at least one additional ground truth label by identifying at least one static object that may interfere with a predicted path of travel.

7. The system as recited in Claim 1, wherein a sum of confidence values associated with two or more of the plurality of predicted paths of travel exceeds 100%.

8. The system as recited in Claim 1, wherein a sum of confidence values associated with the plurality of predicted paths of travel does not exceed 100%.

9. The system as recited in Claim 1, wherein the vision system (200) processing component (212) processes the plurality of predicted paths of travel based on modeled feasibility cone for a dynamic object (400, 500) of the one or more dynamic objects (400, 500).

10. A method for managing vision systems (200) in vehicles (102), the system comprising: obtaining first ground truth label data associated with vision data collected from
one or more vision systems (200), wherein the first ground truth label data corresponds to attributes of travel surfaces;
obtaining second ground truth label data associated with vision data collected from the one or more vision systems (200), wherein the second ground truth label data corresponds to attributes of one or more dynamic objects (400, 500);
processing the first and second ground truth label data to form a plurality of predicted paths of travel of the one or more dynamic objects (400, 500) by applying a kinetics-based model to the attributes of at least one of the travel surfaces or dynamic object (400, 500), wherein each individual predicted path of travel is associated with a confidence value; and
storing the plurality of predicted paths of travel and associated confidence values.

11. The method as recited in Claim 10, wherein forming the plurality of predicted paths of travel based on selecting potential paths of travel exceeding a minimal confidence value threshold.

12. The method as recited in Claim 10, wherein the first and second ground truth label data corresponds to one or more objects detected within a horizon of the captured video data.

13. The method as recited in Claim 10, wherein the first ground truth label data corresponds to attributes of travel surfaces including at least one of road edges ground truth labels, lane line ground truth labels, or road markings.

14. The method as recited in Claim 10, wherein the attributes of one or more dynamic objects (400, 500) corresponds to at least one of yaw, velocity or acceleration of the dynamic object (400, 500).

15. The method as recited in Claim 10 further comprising processing the plurality of predicted paths of travel based on at least one additional ground truth label.

## Patentansprüche

1. System zum Verwalten von Sichtsystemen (200) in Fahrzeugen (102), wobei das System Folgendes aufweist:
ein oder mehrere Rechensysteme, die Verarbeitungsvorrichtungen und einen Speicher enthalten und computerausführbare Anweisungen ausführen, um eine Verarbeitungskomponente (212) des Sichtsystems (200) zu implementieren, die für Folgendes betriebsfähig ist:
Erhalten von ersten Ground-Truth-Kennzeichnungsdaten, die mit Sichtdaten verknüpft sind, die von einem oder mehreren Sichtsystemen (200) erfasst wurden, wobei die ersten Ground-Truth-Kennzeichnungsdaten Merkmalen von Fahrbahnoberflächen entsprechen, die mindestens eines von Ground-Truth-Kennzeichnungen für Straßenränder, Ground-Truth-Kennzeichnungen für Fahrbahnlinien oder Straßenmarkierungen enthalten;
Erhalten von zweiten Ground-Truth-Kennzeichnungsdaten, die mit Sichtdaten verknüpft sind, die von dem einen oder den mehreren Sichtsystemen (200) erfasst wurden, wobei die zweiten Ground-Truth-Kennzeichnungsdaten Merkmalen eines oder mehrerer dynamischer Objekte (400, 500) entsprechen;
Verarbeiten der ersten Ground-Truth-Kennzeichnungsdaten und der zweiten Ground-Truth-Kennzeichnungsdaten, um eine Mehrzahl von vorhergesagten Bewegungsbahnen für das eine oder die mehreren dynamischen Objekte (400, 500) zu bilden, indem ein kinetikbasiertes Modell auf die Merkmale mindestens einer der Fahrbahnoberflächen oder die Merkmale des einen oder der mehreren dynamischen Objekte (400, 500) angewandt wird, wobei jede vorhergesagte Bewegungsbahn mit einem Konfidenzwert verknüpft ist;
Verarbeiten der Mehrzahl von vorhergesagten Bewegungsbahnen basierend auf mindestens einer zusätzlichen Ground-Truth-Kennzeichnung, um mindestens eine vorhergesagte Bewegungsbahn der Mehrzahl von vorhergesagten Bewegungsbahnen zu ändern, wobei die Änderung auf der Anwendung eines aktualisierten kinetikbasierten Modells auf zusätzliche Merkmale zusätzlicher erkannter Objekte basiert; und Speichern der Mehrzahl von vorhergesagten Bewegungsbahnen und der verknüpften Konfidenzwerten.

2. System nach Anspruch 1, wobei die Verarbeitungskomponente (212) des Sichtsystems (200) die erhaltenen ersten und zweiten Ground-Truth-Kennzeichnungsdaten verarbeitet, um basierend auf dem Auswählen potenzieller Bewegungsbahnen, die einen Schwellenwert für den minimalen Konfidenzwert überschreiten, eine Mehrzahl von vorhergesagten Bewegungsbahnen zu bilden.

3. System nach Anspruch 1, wobei die ersten und zweiten Ground-Truth-Kennzeichnungsdaten einem oder mehreren Objekten entsprechen, die innerhalb eines Horizonts der erfassten Videodaten erkannt wurden.

4. System nach Anspruch 3, wobei die ersten und zweiten Ground-Truth-Kennzeichnungsdaten einem oder mehreren Objekten entsprechen, die über eine aktuell definierte Position des Fahrzeugs (102) hinaus erkannt wurden.

5. System nach Anspruch 1, wobei die Merkmale eines oder mehrerer dynamischer Objekte (400, 500) mindestens einem von Gierung, Geschwindigkeit oder Beschleunigung des dynamischen Objekts (400, 500) entsprechen.

6. System nach Anspruch 1, wobei die Verarbeitungskomponente (212) des Sichtsystems (200) die Mehrzahl von vorhergesagten Bewegungsbahnen basierend auf mindestens einer zusätzlichen Ground-Truth-Kennzeichnung verarbeitet, indem mindestens ein statisches Objekt, das eine vorhergesagte Bewegungsbahn beeinträchtigen könnte, identifiziert wird.

7. System nach Anspruch 1, wobei eine Summe von Konfidenzwerten, die mit zwei oder mehr der Mehrzahl von vorhergesagten Bewegungsbahnen verknüpft sind, 100 % überschreitet.

8. System nach Anspruch 1, wobei eine Summe von Konfidenzwerten, die mit der Mehrzahl von vorhergesagten Bewegungsbahnen verknüpft sind, nicht 100 % überschreitet.

9. System nach Anspruch 1, wobei die Verarbeitungskomponente (212) des Sichtsystems (200) die Mehrzahl von vorhergesagten Bewegungsbahnen basierend auf einem modellierten Machbarkeitskegel für ein dynamisches Objekt (400, 500) des einen oder der mehreren dynamischen Objekte (400, 500) verarbeitet.

10. Verfahren zum Verwalten von Sichtsystemen (200) in Fahrzeugen (102), wobei das System Folgendes aufweist:
Erhalten von ersten Ground-Truth-Kennzeichnungsdaten, die mit Sichtdaten verknüpft sind, die von einem oder mehreren Sichtsystemen (200) erfasst wurden, wobei die ersten Ground-Truth-Kennzeichnungsdaten Merkmalen von Fahrbahnoberflächen entsprechen;
Erhalten von zweiten Ground-Truth-Kennzeichnungsdaten, die mit Sichtdaten verknüpft sind, die von dem einen oder den mehreren Sichtsystemen (200) erfasst wurden, wobei die zweiten Ground-Truth-Kennzeichnungsdaten Merkmalen eines oder mehrerer dynamischer Objekte (400, 500) entsprechen;
Verarbeiten der ersten und zweiten Ground-Truth-Kennzeichnungsdaten, um eine Mehrzahl von vorhergesagten Bewegungsbahnen des einen oder der mehreren dynamischen Objekte (400, 500) zu bilden, indem ein kinetikbasiertes Modell auf die Merkmale mindestens einer der Fahrbahnoberflächen oder des dynamischen Objekts (400, 500) angewandt wird, wobei jede einzelne vorhergesagte Bewegungsbahn mit einem Konfidenzwert verknüpft ist; und
Speichern der Mehrzahl von vorhergesagten Bewegungsbahnen und der verknüpften Konfidenzwerten.

11. Verfahren nach Anspruch 10, wobei das Bilden der Mehrzahl von vorhergesagten Bewegungsbahnen auf dem Auswählen potenzieller Bewegungsbahnen basiert, die einen Schwellenwert für den minimalen Konfidenzwert überschreiten.

12. Verfahren nach Anspruch 10, wobei die ersten und zweiten Ground-Truth-Kennzeichnungsdaten einem oder mehreren Objekten entsprechen, die innerhalb eines Horizonts der erfassten Videodaten erkannt wurden.

13. Verfahren nach Anspruch 10, wobei die ersten Ground-Truth-Kennzeichnungsdaten Merkmalen von Fahrbahnoberflächen entsprechen, die mindestens eines von Ground-Truth-Kennzeichnungen für Straßenränder, Ground-Truth-Kennzeichnungen für Fahrbahnlinien oder Straßenmarkierungen enthalten.

14. Verfahren nach Anspruch 10, wobei die Merkmale eines oder mehrerer dynamischer Objekte (400, 500) mindestens einem von Gierung, Geschwindigkeit oder Beschleunigung des dynamischen Objekts (400, 500) entsprechen.

15. Verfahren nach Anspruch 10, das ferner das Verarbeiten der Mehrzahl von vorhergesagten Bewegungsbahnen basierend auf mindestens einer zusätzlichen Ground-Truth-Kennzeichnung umfasst.

## Revendications

1. Système de gestion de systèmes de vision (200) dans des véhicules (102), le système comprenant :
un ou plusieurs systèmes informatiques comprenant des dispositifs de traitement et une mémoire, qui exécutent des instructions exécutables par ordinateur, pour mettre en oeuvre un composant de traitement de système de vision (200) (212) qui est apte à :
obtenir des premières données d'étiquetage de vérité terrain associées à des données de vision collectées à partir d'un ou plusieurs systèmes de vision (200), lesquelles premières données d'étiquetage de vérité terrain correspondent à des attributs de surfaces de circulation comprenant au moins l'une quelconque des étiquettes de vérité terrain de bord de route, des étiquettes de vérité terrain de ligne de voie, ou des marquages routiers ;
obtenir des secondes données d'étiquetage de vérité terrain associées à des données de vision collectées à partir du ou des systèmes de vision (200), lesquelles secondes données d'étiquetage de vérité terrain correspondent à des attributs d'un ou plusieurs objets dynamiques (400, 500) ;
traiter les premières données d'étiquetage de vérité terrain et les secondes données d'étiquetage de vérité terrain pour former une pluralité de trajectoires de déplacement prédites pour le ou les objets dynamiques (400, 500) en appliquant un modèle basé sur la cinétique aux attributs d'au moins l'une quelconque des surfaces de circulation ou aux attributs du ou des objets dynamiques (400, 500), chaque trajectoire de déplacement prédite étant associée à une valeur de confiance ;
traiter la pluralité de trajectoires de déplacement prédites sur la base d'au moins une étiquette de vérité terrain supplémentaire pour modifier au moins une trajectoire de déplacement prédite de la pluralité de trajectoires de déplacement prédites, la modification étant basée sur l'application d'un modèle basé sur la cinétique mis à jour à des attributs supplémentaires d'objets détectés supplémentaires ; et
stocker la pluralité de trajectoires de déplacement prédites et les valeurs de confiance associées.

2. Système selon la revendication 1, dans lequel le composant de traitement de système de vision (200) (212) traite les premières et secondes données d'étiquetage de vérité terrain obtenues pour former une pluralité de trajectoires de déplacement prédites sur la base de la sélection de trajectoires de déplacement potentielles dépassant un seuil minimal de valeur de confiance.

3. Système selon la revendication 1, dans lequel les premières et secondes données d'étiquetage de vérité terrain correspondent à un ou plusieurs objets détectés à l'intérieur d'un horizon des données vidéo capturées.

4. Système selon la revendication 3, dans lequel les premières et secondes données d'étiquetage de vérité terrain correspondent à un ou plusieurs objets détectés au-delà d'une position définie actuelle du véhicule (102).

5. Système selon la revendication 1, dans lequel les attributs d'un ou plusieurs objets dynamiques (400, 500) correspondent à au moins l'un quelconque du lacet, de la vitesse ou de l'accélération de l'objet dynamique (400, 500).

6. Système selon la revendication 1, dans lequel le composant de traitement de système de vision (200) (212) traite la pluralité de trajectoires de déplacement prédites sur la base d'au moins une étiquette de vérité terrain supplémentaire en identifiant au moins un objet statique qui peut interférer avec une trajectoire de déplacement prédite.

7. Système selon la revendication 1, dans lequel une somme de valeurs de confiance associées à deux ou plusieurs de la pluralité de trajectoires de déplacement prédites dépasse 100 %.

8. Système selon la revendication 1, dans lequel une somme de valeurs de confiance associées à la pluralité de trajectoires de déplacement prédites ne dépasse pas 100 %.

9. Système selon la revendication 1, dans lequel le composant de traitement de système de vision (200) (212) traite la pluralité de trajectoires de déplacement prédites sur la base d'un cône de faisabilité modélisé pour un objet dynamique (400, 500) du ou des objets dynamiques (400, 500).

10. Procédé de gestion de systèmes de vision (200) dans des véhicules (102), le système comprenant : obtenir des premières données d'étiquetage de vérité terrain associées à des données de vision collectées à partir
d'un ou plusieurs systèmes de vision (200), lesquelles premières données d'étiquetage de vérité terrain correspondent à des attributs de surfaces de circulation ;
obtenir des secondes données d'étiquetage de vérité terrain associées à des données de vision collectées à partir du ou des systèmes de vision (200), lesquelles secondes données d'étiquetage de vérité terrain correspondent à des attributs d'un ou plusieurs objets dynamiques (400, 500) ;
traiter les premières et secondes données d'étiquetage de vérité terrain pour former une pluralité de trajectoires de déplacement prédites du ou des objets dynamiques (400, 500) en appliquant un modèle basé sur la cinétique aux attributs d'au moins l'une quelconque des surfaces de circulation ou de l'objet dynamique (400, 500), chaque trajectoire de déplacement prédite individuelle étant associée à une valeur de confiance ; et
stocker la pluralité de trajectoires de déplacement prédites et les valeurs de confiance associées.

11. Procédé selon la revendication 10, dans lequel la formation de la pluralité de trajectoires de déplacement prédites est basée sur la sélection de trajectoires de déplacement potentielles dépassant un seuil minimal de valeur de confiance.

12. Procédé selon la revendication 10, dans lequel les premières et secondes données d'étiquetage de vérité terrain correspondent à un ou plusieurs objets détectés à l'intérieur d'un horizon des données vidéo capturées.

13. Procédé selon la revendication 10, dans lequel les premières données d'étiquetage de vérité terrain correspondent à des attributs de surfaces de circulation comprenant au moins l'une quelconque des étiquettes de vérité terrain de bord de route, des étiquettes de vérité terrain de ligne de voie, ou des marquages routiers.

14. Procédé selon la revendication 10, dans lequel les attributs d'un ou plusieurs objets dynamiques (400, 500) correspondent à au moins l'un quelconque du lacet, de la vitesse ou de l'accélération de l'objet dynamique (400, 500).

15. Procédé selon la revendication 10 comprenant en outre le traitement de la pluralité de trajectoires de déplacement prédites sur la base d'au moins une étiquette de vérité terrain supplémentaire.
